# EUROPÄISCHE PATENTSCHRIFT

(11) **EP 0 989 021 B1**
(45) Veröffentlichungstag und Bekanntmachung des Hinweises auf die Patenterteilung: **17.11.2010**
(21) Anmeldenummer: 99117518.3
(22) Anmeldetag: 04.09.1999
(51) Int. Cl.: B60N 3/10

(54) **Getränkehalter**
Beverage holder
Porte-boissons

(30) Priorität: 25.09.1998 US 160753; 03.02.1999 DE 19904124
(43) Veröffentlichungstag der Anmeldung: 29.03.2000
(73) Patentinhaber: Bayerische Motoren Werke Aktiengesellschaft, 80788 München (DE)
(72) Erfinder: Salenbauch, Hermann Jürgen, 82538 Geretsried (DE); Klatt, Alexander, 80802 München (DE); Stancel, Robert, Los Altos Hills, CA 94022 (US); Kaplan, Johnathan I., Palo Alto, CA 94306 (US); Kazaks, Alex, La Crosse, WI 54601 (US); Vassallo, Steven, Palo Alto, CA 94306 (US); MacGregor, Bruce Grant, Palo Alto, CA 94306 (US)

(56) Entgegenhaltungen:
- EP-A- 0 800 954
- DE-A- 2 302 891
- DE-C- 393 017
- US-A- 5 195 711
- US-A- 5 791 618

## Beschreibung

Die Erfindung betrifft einen Getränkehalter nach dem Oberbegriff des Anspruchs 1.

Beispielsweise aus der EP 0 800 954 A2 ist ein gattungsgemäßer Getränkehalter bekannt, in dessen zylindrische Einstellöffnung mehrere federbelastete Haltebacken ragen. Um Getränkebehälter mit verschiedenen Durchmessern aufnehmen zu können, weisen die Haltebacken gestufte Halteflächen mit unterschiedlichen radialen Abständen zur Mitte der Einstellöffnung auf. Hierdurch wird eine vom Durchmesser des Getränkebehälters abhängige Klemmkraft erzeugt, die den Getränkebehälter mehr oder weniger sicher fixiert.

Aufgabe der Erfindung ist es, eine Vorrichtung zur Aufnahme eines Getränkebehälters bereitzustellen, die eine durchmesserunabhängige, sichere Klemmwirkung erzeugt.

Diese Aufgabe wird durch einen Getränkehalter mit den Merkmalen des Anspruchs 1 gelöst.

Kerngedanke ist hierbei, durch Verdrehen eines Abschnitts des Getränkehalters oder eines in das Innere des Getränkehalters eingesetzten Ringes gegenüber dem feststehenden (Abschnitt des) Getränkehalter(s) einen innenliegenden Einsatz ebenfalls zu verdrehen, der sich hierdurch einschnürt und somit die lichte Weite des Getränkehalters verkleinert, wodurch eine durchmesserunabhängige, sichere Klemmwirkung auf den Getränkebehälter erzeugt wird.

Im Unterschied zu bekannten Getränkehaltern, bei denen der Getränkebehälter in einen Hohlzylinder eingestellt wird, an dessen Innenumfang Formschluß erzeugende, beispielsweise durch Federkraft vorgespannte Einrichtungen, vorhanden sind, zeichnet sich der erfindungsgemäße Getränkehalter durch eine durchmesserunabhängige, sichere Klemmwirkung aus. Da die Klemmkraft erst nach dem Einstellen des Getränkebehälters aufgebracht wird, sind während des Einstellens des Getränkebehälters keinerlei radial wirkende Kräfte zu überwinden. Auch gestaltet sich die Entnahme des Behälters nach erfolgter Rückverlagerung des klemmenden Einsatzes in seine Ausgangslage besonders komfortabel. Die Verdrehung der beiden Abschnitte des Getränkebehälters zueinander bzw. die Verdrehung des Ringes kann durch Muskelkraft oder durch Fremdkraft erfolgen. Die Arretierung in der Klemmlage erfolgt beispielsweise durch einen Sperrklinkenmechanismus oder durch Selbsthemmung.

Erfindungsgemäß ist ein Bodenteil vorgesehen, dessen Belastung die Verdrehung des Einsatzes selbsttätig in Gang setzt. Umgekehrt wird durch die Entlastung des Bodenteils in der Anfangsphase der Entnahme des eingestellten Getränkebehälters der Einsatz wieder in seine Ausgangslage zurück gedreht. Während bei bekannten Getränkehaltern während des Einstellvorganges sowie bei der Entnahme des Getränkebehälters zum Teil beträchtliche Klemmkräfte zu überwinden sind, zeichnet sich der erfindungsgemäße Getränkehalter infolge der selbsttätig erfolgenden Fixierung bzw. Freigabe des Getränkebehälters durch einen besonders hohen Bedienkomfort aus. Außerdem stellt sich beim Benutzer, der den Getränkehalter "ohne Gebrauchsanweisung" automatisch richtig bedienen wird, aufgrund der selbsttätig erfolgenden Klemmung ein positiver Überraschungseffekt ein.

Zwar ist aus der DE-PS 393 017 und der DE 2 302 891 A1 eine Mehrzahl von Vorrichtungen bekannt, die nach dem Prinzip gegeneinander verdrehbarer, über einen Einsatz miteinander verbundener Scheiben oder Ringe arbeiten. Dieses Wirkprinzip kommt gemäß den beiden Druckschriften bei folgenden Einrichtungen zum Einsatz: Spanneinrichtungen für Werkstücke, Press- und Stanzwerkzeugen, Messeinrichtungen, Zentriervorrichtungen, Knetvorrichtungen für teigartige Stoffe, Brechvorrichtungen für Steine, Wagenhebern, Hilfsmitteln zur Befestigung von Maschinenteilen, Zeltpflöcken, Schnellverschlüssen von Flanschverbindungen, Handwerkzeugen, Nussknackern, Schläuchen größeren Durchmessers; Bremsen und Kupplungen sowie Kombinationen davon, Wechselkupplungen, automatischen Eisenbahnkupplungen sowie Gesperren und Schälvorrichtungen, beispielsweise für Spargel. Als weitere Anwendungsmöglichkeiten des Wirkprinzips sind Lichtblenden, Stauflansche und verstellbare Düsen genannt. Die beiden Druckschriften geben weder einen Hinweis, das bekannte Wirkprinzip zum Halten eines Getränkebehälters zu nutzen noch die bekannten Vorrichtungen so auszugestalten, dass sie zur Aufnahme eines Getränkebehälters geeignet sind.

Der Einsatz ist gemäß Anspruch 2 "nach Art eines Strumpfes" ausgebildet, mit einer biegeschlaffen Wandung, die bevorzugt aus einem elastischen Material besteht. Selbstverständlich muß der Einsatz (abweichend vom Wortlaut des Anspruchs 2) nicht einstückig und umlaufend sein, sondern kann auch von einer oder mehreren (beispielsweise von zwei einander gegenüberliegend angeordneten) Teilflächen eines Hohlzylinders gebildet werden.

In alternativer Ausgestaltung der Erfindung gemäß Anspruch 3 wird der Einsatz von mehreren Verbindungselementen gebildet, die jeweils die Form eines Stabes, Flachstabes, Bandes etc. aufweisen. Hierdurch wird eine innenliegende Struktur geschaffen, die zwar nicht flüssigkeits- oder gasdicht ist, bei Verdrehung jedoch für feste Gegenstände die lichte Durchlaßweite des Getränkehalters reduziert. Somit können Getränkebehälter im Inneren des Hohlzylinders durch Klemmung gehalten werden.

Die Verbindungselemente gemäß Anspruch 3 können elastisch oder formsteif ausgebildet sein. Während bei elastischen Verbindungselementen die durch Verdrehung der Abschnitte des Getränkehalters bzw. des Ringes bewirkte Form- und Längenänderung vom Material selbst bewerkstelligt wird, ist gemäß Anspruch 4 bei formsteifen Verbindungselementen zusätzlich eine gelenkige Anbindung sowie ein Längenausgleich erforderlich. Durch formsteife Verbindungselemente können gegebenenfalls höhere Klemmkräfte erreicht werden, als dies bei elastischen Verbindungselementen der Fall ist.

Anspruch 5 sieht eine fremdkrafterzeugende Stelleinheit vor. Durch die motorische Verstellung wird einerseits eine Erhöhung des Bedienkomforts erreicht. Andererseits ermöglicht die Stelleinheit eine Fernbetätigung oder eine automatisierte Betätigung, so daß beispielsweise bei einem durchströmten Rohr in Abhängigkeit von verschiedenen Parametern über eine Steuerungs- oder Regelungseinheit eine selbsttätige Veränderung des Durchlaßquerschnittes erzielbar ist.

Zur Erzielung ausreichend hoher und konstanter Klemmkräfte ist gemäß Anspruch 6 eine Einrichtung vorgesehen, die bei Überschreitung eines vorgegebenen Drehmomentes selbsttätig die Stelleinheit abschaltet. Hierdurch wird unabhängig vom Durchmesser der eingestellten Getränkebehälter eine ausreichende Klemmkraft aufgebracht.

Anspruch 7 beschreibt eine mögliche Ausführungsform einer derartigen Einrichtung zur Abschaltung der Stelleinheit. Alternativ kann die Abschaltung der Stelleinheit weggesteuert mit Überschreitung eines bestimmten Verdrehwinkels erfolgen. Eine weitere Möglichkeit liegt in der Begrenzung des Verdrehwinkels über die Stromaufnahme einer als Elektromotor ausgebildeten Stelleinheit, indem bei Überschreitung eines Maximalwertes für die Stromaufnahme, die einem bestimmten Drehmoment zugeordnet ist, die Stelleinheit abgeschaltet wird.

Mögliche Ausführungsbeispiele der Erfindung sind in der Zeichnung dargestellt und nachfolgend näher erläutert. Es zeigt:
- Figur 1: eine perspektivische Darstellung eines Getränkehalters, mit einer elek- tromotorischen Stelleinheit,
- Figur 2: eine Darstellung des Getränkehalters von Figur 1 nach erfolgter Verdre- hung, ohne Darstellung der Stelleinheit,
- Figur 3: eine schematische Darstellung der Wirkungsweise des erfindungsge- mäßen Getränkehalters,
- Figur 4: schematische Schnittdarstellungen von Rohren für flüssige oder gas- förmige Medien, mit einem Einsatz zur Erzeugung einer Querschnittsre- duzierung,
- Figur 5: eine Einrichtung zur Abschaltung der Stelleinheit für den Getränkehalter von Figur 1, in teilweiser Schnittdarstellung und
- Figur 6: einen teilweisen Vertikalschnitt im Bereich der Einrichtung von Figur 5.

Ein Getränkehalter gemäß der Erfindung besteht im wesentlichen aus einem Hohlzylinder 1, der in einen oberen und einen unteren Abschnitt 2 bzw. 3 unterteilt ist. Im Inneren des Hohlzylinders 1 befindet sich ein Einsatz 4 aus einer Mehrzahl von Stäben 5, die mit ihrem oberen Ende am oberen Abschnitt 2 und mit ihrem unteren Ende am unteren Abschnitt 3 festgelegt sind. Die Stäbe 5 sind beim vorliegenden Ausführungsbeispiel äquidistant verteilt und beschreiben eine zylindrische Mantelfläche, wobei selbstverständlich ebenso eine ungleichmäßige Verteilung der Stäbe 5 möglich ist.

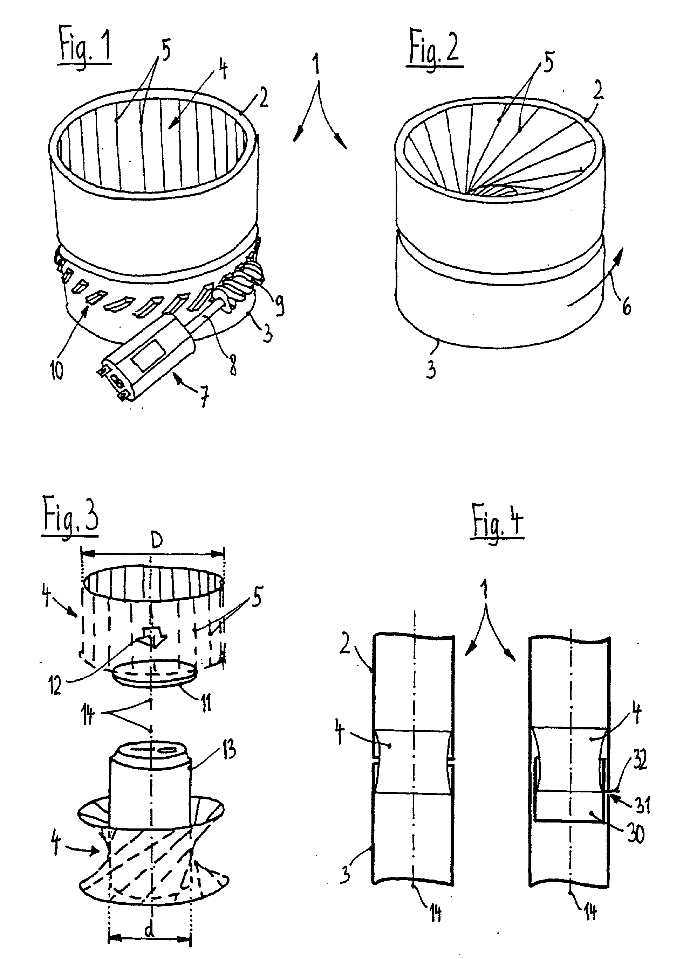

Der Getränkehalter ist beispielsweise versenkt in eine Mittelkonsole eines Kraftfahrzeuges eingesetzt. Während der obere Abschnitt 2 an der Mittelkonsole festgelegt ist, ist der untere Abschnitt 3 gegenüber dem oberen Abschnitt 2 verdrehbar, wie durch den Pfeil 6 (Figur 2) veranschaulicht. Die Verdrehung wird durch eine elektromotorische Stelleinheit 7 bewirkt, die über eine Abtriebswelle 8 mit endseitiger Schnecke 9 eine Schneckenverzahnung 10 am Außenumfang des unteren Abschnittes 3 antreibt. Die Schneckenverzahnung 10 bildet ein Schneckenrad, das in Verbindung mit der Schnecke 9 selbsthemmend ausgelegt ist.

Zur Verdeutlichung der Wirkungsweise des erfindungsgemäßen Getränkehalters ist in Figur 3 der Hohlzylinder 1 nicht dargestellt, so daß der Einsatz 4 mit seinen Stäben 5 sichtbar ist, wobei diejenigen Stäbe 5, die gemäß den Figuren 1 und 2 vom Hohlzylinder 1 verdeckt werden, strichliert dargestellt sind.

Der Einsatz 4 weist im Ausgangszustand (obere Darstellung der Figur 3) einen Innendurchmesser D auf. Bei Belastung (Pfeil 12) eines Bodenteils 11 am unteren Ende des Hohlzylinders 1 durch einen eingesetzten Getränkebehälter in Form einer Getränkedose 13 wird die Stelleinheit 7 so angesteuert, daß sie eine Verdrehung des unteren Abschnittes 3 bewirkt. Hierdurch werden die Stäbe 5 in ihre im unteren Teil der Figur 3 dargestellte Schräglage gebracht, in der sie den Getränkebehälter 13 zuverlässig klemmen. In dieser Lage beschreiben die Stäbe 5 ein einschaliges Hyperboloid mit einer reduzierten inneren lichten Weite d. Die Stäbe 5 sind an ihren Enden gegenüber den Abschnitten 2 und 3 sphärisch beweglich gelagert sowie zusätzlich an einem der Abschnitte 2 oder 3 in Richtung ihrer Längserstreckung nicht fixiert (Längenausgleich). Bei Entlastung des Bodenteils 11 wird die Stelleinheit 7 in umgekehrter Weise angesteuert, wodurch der Einsatz 4 in seine Ausgangslage zurückgedreht wird und den Getränkebehälter 13 freigibt.

In Figur 4 sind beispielhaft zwei Möglichkeiten der Realisierung der Erfindung an einem flüssigkeits- oder gasführenden Rohr 1 veranschaulicht. Im linken Teil der Darstellung ist das Rohr 1 (analog der Ausführung des Getränkehalters nach den Figuren 1 bis 3) in zwei gegeneinander verdrehbare Abschnitte 2 und 3 unterteilt, die durch einen Einsatz 4 in Form eines geschlossenwandigen, schlauchförmigen Gebildes abdichtend miteinander verbunden sind. Gemäß der Darstellung im rechten Teil von Figur 4 ist das Rohr 1 ein durchgehender, ungeteilter Hohlzylinder mit einem innenliegenden, konzentrischen Ring 30 kleineren Durchmessers, der durch eine schlitzförmige Öffnung 31 im Rohr 1 über einen nach außen ragenden Stift 32 verdreht werden kann. Auch bei diesem Ausführungsbeispiel besteht der Einsatz 4 aus einem geschlossenwandigen, schlauchförmigen Gebilde.

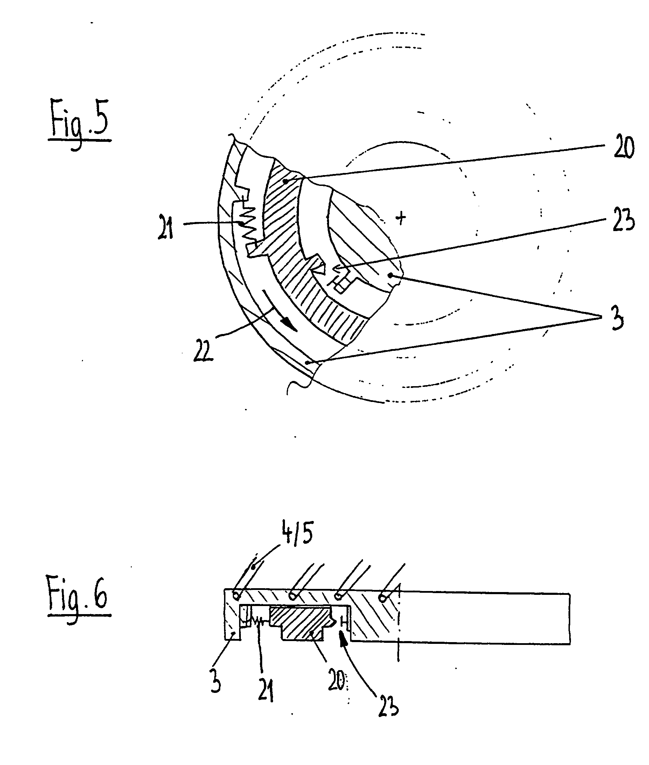

In den Figuren 5 und 6 ist eine Einrichtung zur Abschaltung der Stelleinheit 7 bei Überschreitung einer vorgegebenen Klemmkraft dargestellt. Eine derartige Einrichtung kann beispielsweise für einen Getränkehalter gemäß den Figuren 1 bis 3 eingesetzt werden. Abweichend von der Darstellung der Figur 1 erfolgt der Antrieb des unteren Abschnittes 3 durch die Stelleinheit 7 jedoch mittelbar über einen Schaltring 20. In der Anfangsphase der Klemmung eines eingestellten Getränkebehälters 13 verdreht der von der Stelleinheit 7 angetriebene Schaltring 20 über eine Feder 21 den unteren Abschnitt 3 und damit die Stäbe 5 des Einsatzes 4. Nachdem sich die Stäbe 5 am Getränkebehälter 13 angelegt haben, kann die Stelleinheit 7 die Klemmkraft so lange erhöhen, bis die Klemmkraft die Federkraft der Feder 21 übersteigt, wodurch sich der Schaltring 20 in Richtung des Pfeils 22 verdreht und einen Schaltkontakt 23 betätigt, der die Stelleinheit 7 abschaltet. Durch eine mechanische Arretierung beispielsweise in Form einer Sperrklinke oder durch eine selbsthemmend ausgelegte Stelleinheit 7 wird die Klemmkraft nach Abschaltung der Stelleinheit 7 aufrechterhalten.

## Patentansprüche

1. Getränkehalter mit einer vertikal ausgerichteten Längsachse zur Aufnahme eines Getränkebehälters oder dergleichen,
**dadurch gekennzeichnet, dass**
- der Getränkehalter (1) in zwei gegeneinander verdrehbare Abschnitte (2, 3) unterteilt ist, die über einen im Inneren des Getränkehalters (1) angeordneten Einsatz miteinander verbunden sind, der sich bei Verdrehung der Abschnitte (2, 3) so verformt oder verlagert, daß sich die lichte Weite des Getränkehalters (1) verringert oder
- im Inneren des Getränkehalters (1) ein gegenüber dem Getränkehalter (1) verdrehbarer Ring (30) angeordnet ist, der mit der Innenseite des Getränkehalters (1) über einen Einsatz (4) verbunden ist, wobei sich der Einsatz (4) bei Verdrehung des Rings (30) so verformt oder verlagert, daß sich die lichte Weite des Getränkehalters (1) verringert, wobei
- der Getränkehalter (1) ein Bodenteil zum Aufsetzen des Getränkebehälters (13) aufweist, das mit einer Schalteinrichtung zusammenwirkt, die abhängig von der Gewichtsbeaufschlagung des Bodenteils (11) eine Stelleinheit (7) zur Verdrehung der beiden Abschnitte (2, 3) gegeneinander bzw. zur Verdrehung des Rings (30) gegenüber dem Getränkehalter (1) ansteuert.

2. Getränkehalter nach Anspruch 1,
**dadurch gekennzeichnet, daß** der Einsatz (4) ein schlauchförmiges Gebilde ist, dessen Endbereiche ringförmig mit den Abschnitten (2, 3) bzw. mit dem Getränkehalter (1) und mit dem Ring (30) verbunden sind.

3. Getränkehalter nach Anspruch 1,
**dadurch gekennzeichnet, daß** der Einsatz (4) von einer Mehrzahl langgestreckter Verbindungselemente (5) gebildet wird, deren Endbereiche jeweils mit den Innenseiten der Abschnitte (2, 3) bzw. mit dem Getränkehalter und mit dem Ring verbunden sind.

4. Getränkehalter nach Anspruch 3,
**dadurch gekennzeichnet, daß** die Verbindungselemente (5) formsteif sind und an ihren Endbereichen gelenkig mit den Abschnitten (2, 3) bzw. mit dem Getränkehalter (1) und mit dem Ring (30) verbunden sind, wobei an wenigstens einem Endbereich der Verbindungselemente (5) ein Längenausgleich gegenüber den Abschnitten (2, 3) bzw. dem Getränkehalter (1) oder dem Ring (30) erfolgt.

5. Getränkehalter nach einem der vorgenannten Ansprüche,
**dadurch gekennzeichnet, daß** eine motorische Stelleinheit (7) zur Verdrehung der beiden Abschnitte (2, 3) gegeneinander bzw. zur Verdrehung des Rings (30) gegenüber dem Getränkehalter (1) vorgesehen ist.

6. Getränkehalter nach einem der vorgenannten Ansprüche,
**dadurch gekennzeichnet, daß** eine Einrichtung vorgesehen ist, die bei Überschreitung eines vorgegebenen Drehmomentes die Stelleinheit (7) abschaltet.

7. Getränkehalter nach Anspruch 6,
**dadurch gekennzeichnet, daß** die Einrichtung ein von der Stelleinheit (7) angetriebenes Schaltelement (20) aufweist, das über eine Feder (21) einen Abschnitt (2, 3) des Getränkehalters (1) bzw. den Getränkehalter (1) oder den Ring (30) verdreht, wobei sich bei Überschreitung der Federkraft der Feder (21) das Schaltelement (21) relativ zum Abschnitt (2, 3) bzw. zum Getränkehalter (1) oder zum Ring (30) bewegt und hierdurch einen Schaltkontakt (23) betätigt, der die Stelleinheit (7) abschaltet.

## Claims

1. A beverage holder with a vertically oriented longitudinal axis for receiving a beverage container or the like, **characterised in that**
- the beverage holder (1) is divided into two portions (2, 3) which can be rotated relative to one another and which are connected to one another by means of an insert arranged in the interior of the beverage holder (1), which insert is deformed or displaced on rotation of the portions (2, 3) in such a way that the inside width of the beverage holder (1) is reduced or
- a ring (30), which can be rotated relative to the beverage holder (1), is arranged in the interior of the beverage holder (1) and is connected to the inside of the beverage holder (1) by means of an insert (4), the insert (4) being deformed or displaced on rotation of the ring (30) in such a way that the inside width of the beverage holder (1) is reduced, wherein
- the beverage holder (1) has a base part for the beverage container (13) to be placed thereon, which cooperates with a switching device, which, depending on the weight loading of the base part (11), activates an adjusting unit (7) to rotate the two portions (2, 3) relative to one another or to rotate the ring (30) relative to the beverage holder (1).

2. A beverage holder according to claim 1, **characterised in that** the insert (4) is a hose-shaped structure, the end regions of which are annularly connected to the portions (2, 3) or to the beverage holder (1) and to the ring (30).

3. A beverage holder according to claim 1, **characterised in that** the insert (4) is formed by a plurality of elongated connecting elements (5), the end regions of which are in each case connected to the insides of the portions (2, 3) or to the beverage holder and to the ring.

4. A beverage holder according to claim 3, **characterised in that** the connecting elements (5) are dimensionally rigid and are connected in an articulated manner at their end regions to the portions (2, 3) or to the beverage holder (1) and to the ring (30), a longitudinal compensation relative to the portions (2, 3) or to the beverage holder (1) or the ring (30) taking place at at least one end region of the connecting elements (5).

5. A beverage holder according to any one of the preceding claims, **characterised in that** a motor adjusting unit (7) is provided to rotate the two portions (2, 3) relative to one another or to rotate the ring (30) relative to the beverage holder (1).

6. A beverage holder according to any one of the preceding claims, **characterised in that** a device is provided which switches off the adjusting unit (7) when a predetermined torque is exceeded.

7. A beverage holder according to claim 6, **characterised in that** the device has a switching element (20), which is driven by the adjusting unit (7) and rotates a portion of the beverage holder (1) or the beverage holder (1) or the ring (30) by means of a spring (21), the switching element moving relative to the portion (2, 3) or to the beverage holder (1) or to the ring (30) when the spring force of the spring (21) is exceeded, and thereby actuating a switch contact (23), which switches off the adjusting unit (7).

## Revendications

1. Porte-boisson comportant un logement d'axe longitudinal vertical pour recevoir un récipient à boissons ou analogue,
**caractérisé en ce que**
- le porte-boisson (1) est subdivisé en deux parties (2, 3) pour tourner l'une par rapport à l'autre, et reliées par un insert à l'intérieur du porte-boisson (1), cet insert se déformant et se déplaçant par rotation des parties (2, 3) de façon que l'ouverture libre du porte-boisson (1) diminue, ou
- un anneau (30) susceptible de tourner par rapport au porte-boisson (1) est prévu à l'intérieur du porte-boisson (1), cet anneau étant relié aux côtés intérieurs du porte-boisson (1) par un insert (4) et par rotation de l'anneau (30), l'insert (4) se déforme ou se déplace pour diminuer la largeur libre du porte-boisson (1),
dans lequel
- le porte-boisson (1) comporte un fond pour recevoir le récipient de boissons (13) coopérant avec une installation de commutation qui, en fonction du poids sollicitant le fond (11), commande un actionneur (7) pour tourner l'une par rapport à l'autre les deux parties (2, 3) ou tourner l'anneau (30) par rapport au porte-boisson (1).

2. Porte-boisson selon la revendication 1,
**caractérisé en ce que**
l'insert (4) a une structure tubulaire dont les zones d'extrémité sont reliées par une forme annulaire aux segments (2, 3) ou au porte-boisson (1) et à l'anneau (30).

3. Porte-boisson selon la revendication 1,
**caractérisé en ce que**
l'insert (4) est formé par un ensemble d'éléments de liaison (5) allongés, dont les extrémités sont reliées respectivement aux côtés intérieurs des parties (2, 3) ou au porte-boisson et à l'anneau.

4. Porte-boisson selon la revendication 3,
**caractérisé en ce que**
- les éléments de liaison (5) sont de forme rigide et leurs extrémités sont reliées de manière articulée aux parties (2, 3) ou au porte-boisson (1) et à l'anneau (30),
- au moins une extrémité des éléments de liaison (5) a une compensation de longueur par rapport aux parties (2, 3) ou par rapport au porte-boisson (1) ou à l'anneau (30).

5. Porte-boisson selon l'une des revendications précédentes,
**caractérisé par**
un actionneur à moteur (7) pour faire tourner les deux parties (2, 3) l'une par rapport à l'autre ou pour faire tourner l'anneau (30) par rapport au porte-boisson (1).

6. Porte-boisson selon l'une des revendications précédentes,
**caractérisé par**
une installation qui coupe l'actionneur (7) en cas de dépassement d'un couple prédéfini.

7. Porte-boisson selon la revendication 6,
**caractérisé en ce que**
- l'installation comporte un élément de commutation (20) entraîné par l'actionneur (7) et tournant par l'intermédiaire d'un ressort (21), une partie (2, 3) du porte-boisson (1) ou le porte-boisson (1) ou l'anneau (30),
- et en cas de dépassement de la force du ressort (21), l'élément de commutation (21) se déplace par rapport à la partie (2, 3) ou au porte-boisson (1) ou à l'anneau (30) pour actionner un contact (23) qui coupe l'actionneur (7).
